# EUROPEAN PATENT APPLICATION

(11) **EP 2 296 373 A1**
(43) Date of publication of application: **16.03.2011**
(21) Application number: 10162641.4
(22) Date of filing: 12.05.2010
(51) Int. Cl.: H04N 5/76, G11B 27/10

(54) **Electronic apparatus and program table generating method**

(30) Priority: 03.09.2009 JP 2009204083
(71) Applicant: Kabushiki Kaisha Toshiba, Tokyo 105-8001 (JP)
(72) Inventor: Kimura, Takahiro, Tokyo (JP); Miyazawa, Akira, Tokyo (JP); Kuwahara, Kazuki, Tokyo (JP)
(74) Representative: Henkel, Feiler & Hänzel

(57) **Abstract**

An electronic apparatus includes: a reproducing module configured to reproduce a content that is previously recorded; an information receiving module configured to receive electronic program table information including a point in time at which the content is recorded; and a program table generating module configured to display, when the content is reproduced by the reproducing module, a clock-time at which the content is recorded, and to generate a program table, based on the electronic program table information before or after the clock-time, by partitioning the program table into parts each of which corresponds to an associated one of content providers of the content and includes program information relating to the content.

## Description

### CROSS-REFERENCE TO THE RELATED APPLICATION(S)

The present application is based upon and claims priority from prior Japanese Patent Application No. 2009-204083, filed on September 3, 2009, the entire contents of which are incorporated herein by reference.

### BACKGROUND

### 1. Field

The present invention relates to an electronic apparatus and an electronic program table generating method capable of generating an electronic program table displayable to a user.

### 2. Description of the Related Art

In recent years, an electronic apparatus has been provided, which receives broadcast waves and an electronic program guide called "EPG" provided from a network and displays an electronic broadcast-program table based on the electronic program guide.

Also, there is proposed an electronic apparatus having a plurality of tuners and capable of receiving a plurality of broadcast waves simultaneously.

Among the electronic apparatuses having a plurality of tuners, a program table image generating apparatus has been proposed, which displays a plurality of received images respectively corresponding to programs in columns of an electronic program table such that users can see broadcast contents of programs intuitively. An example of such apparatus is disclosed in JP-A-2006-100949.

Additionally, an electronic apparatus has been proposed, which has functions of simultaneously receiving a plurality of broadcast waves using a plurality of tuners and of concurrently recording received programs (videos) in parallel with one another.

Thus, in the case of viewing a plurality of programs simultaneously recorded, when the recorded programs are indicated in the form of a program table, a user can easily select the program to view, and can view another program recorded simultaneously with the currently viewed program, as if the user switched a channel. Accordingly, the user can view the recorded programs as if the user went back in the past and viewed the programs while the programs were actually broadcasted.

### SUMMARY

One of objects of the present invention is to provide an electronic apparatus and a program table generating method capable of generating a program table facilitating a user's selection of a program which the user desires to view such that even when a program table of the recorded programs is displayed, the user can view the desired program as if the electronic apparatus received broadcast waves representing the recorded program as a currently broadcasted program.

According to an aspect of the present invention, there is provided an electronic apparatus including: a reproducing module configured to reproduce a content that is previously recorded; an information receiving module configured to receive electronic program table information including a point in time at which the content is recorded; and a program table generating module configured to display, when the content is reproduced by the reproducing module, a clock-time at which the content is recorded, and to generate a program table, based on the electronic program table information before or after the clock-time, by partitioning the program table into parts each of which corresponds to an associated one of content providers of the content and includes program information relating to the content.

According to another aspect of the present invention, there is provided a program table generating method including: reproducing a content that is previously recorded; receiving electronic program table information including a point in time at which the content is recorded; displaying, when the content is reproduced, a clock-time at which the content is recorded; and generating a program table, based on the electronic program table information before or after the clock-time, by partitioning the program table into parts each of which corresponds to an associated one of content providers of the content and includes program information relating to the content.

### BRIEF DESCRIPTION OF THE DRAWINGS

A general configuration that implements the various features of the present invention will be described with reference to the drawings. The drawings and the associated descriptions are provided to illustrate embodiments of the invention and not to limit the scope of the invention.
FIG 1 is a schematic perspective diagram illustrating an example of the external appearance of a digital television set including an electronic apparatus according to an embodiment of the invention.
FIG. 2 is a block diagram illustrating an example of the configuration of the digital television set according to the embodiment of the invention.
FIG. 3 is a block diagram illustrating an example of a configuration of functional blocks concerning a program related information display of the digital television set according to the embodiment of the invention.
FIG. 4 is a diagram illustrating an example of a display of an electronic program table indicating current and later programs according to the embodiment of the invention.
FIG. 5 is a diagram illustrating an example of a display of an electronic program table of programs of a plurality of channels, which have been broadcasted and simultaneously recorded in the past, according to the embodiment of the invention.
FIG. 6 is a diagram illustrating an example of a display of an electronic program table according to the embodiment of the invention in a case where a moving image cannot be displayed.
FIG. 7 is a flowchart illustrating an example of a flow of an electronic program table display process to be performed by the digital television set according to the embodiment of the invention.

### DETAILED DESCRIPTION

An embodiment according to the present invention will be described in detail with reference to the accompanying drawings. The scope of the claimed invention should not be limited to the examples illustrated in the drawings and those described below.

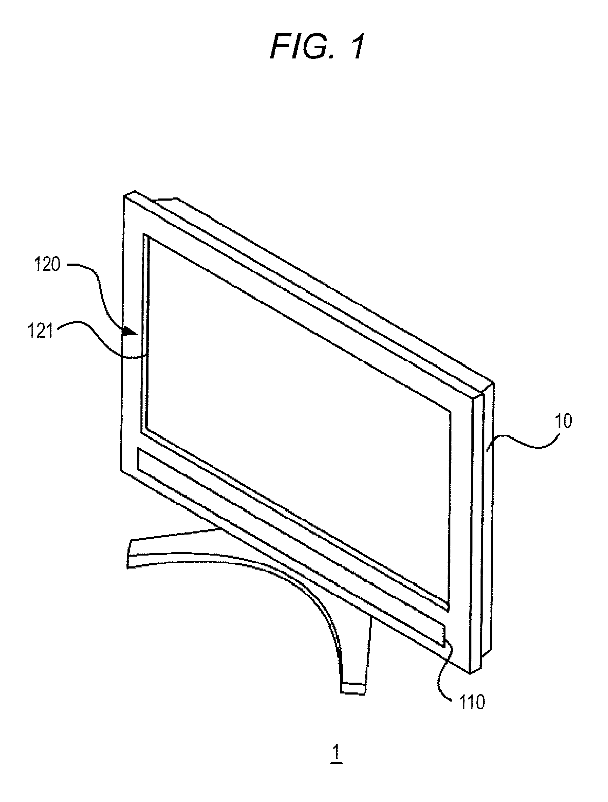

FIG. 1 is a schematic perspective diagram illustrating an example of the external appearance of a digital television set 1 including an electronic apparatus according to the embodiment of the invention. In the following description of the present embodiment, a case where an electronic apparatus according to the invention is implemented as a digital television set 1 is described. However, the invention is not limited thereto. The electronic apparatus according to the invention can be used in a broadcast receiving apparatus, a portable telephone with a broadcast receiving function, a video recording apparatus in which a broadcast receiving apparatus is mounted. Also, the electronic apparatus according to the invention can be used in a broadcast receiving apparatus capable of receiving a program distributed from a broadcast station via a network, a personal computer (PC), and the like. The invention is not limited thereto.

This digital television set 1 includes a main body 10 that houses electronic devices, e.g., tuners, an audio amplifier, and a signal processor, a display unit 120 provided with a display device such as a liquid crystal display (LCD), and a speaker 110 for outputting audio. The digital television set 1 is supplied with electric power via a plug (not shown), and receives terrestrial digital broadcast waves via an antenna which is described below. Then, the received terrestrial digital broadcast wave signals are decoded by a signal processor. Thus, the digital television set 1 outputs video signals and audio signals. The display unit 120 processes the decoded video signals and displays videos. The speaker 110 receives the decoded audio signals to thereby output signals as audio.

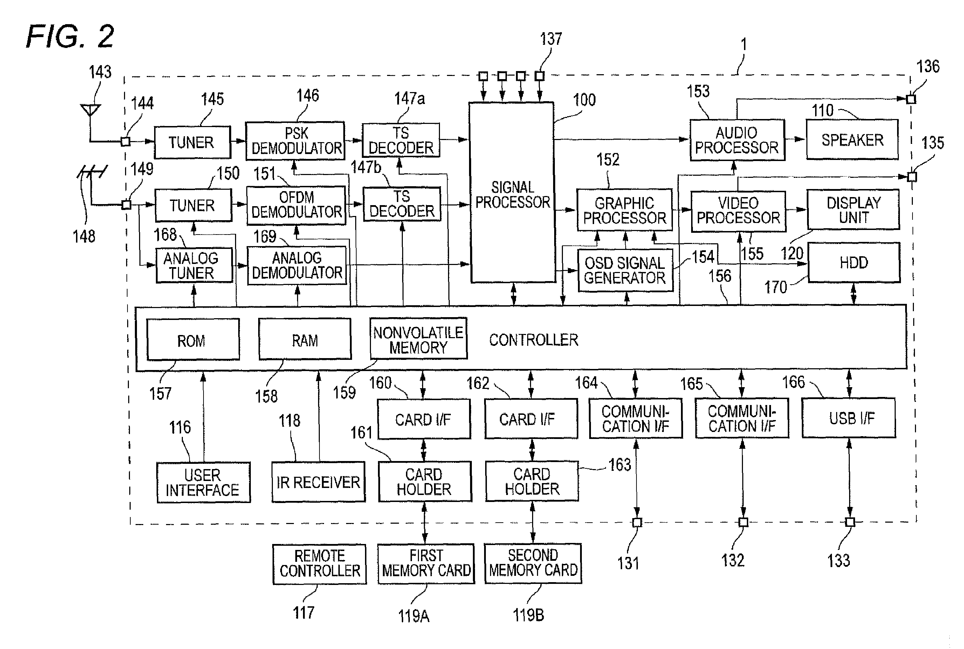

FIG. 2 is a block diagram illustrating an example of the configuration of the digital television set according to the present embodiment.

This digital television set 1 includes a controller 156 for controlling various components of the apparatus. The controller 156 incorporates a central processing unit (CPU) and the like. The controller 156 activates a system control program and various processing programs preliminarily stored in a read-only memory (ROM) 157 according to an operation signal input from a user interface 116 and to an operation signal that is transmitted from a remote controller 117 and received via an IR receiver 118. The controller 156 controls an operation of each portion of the apparatus according to the activated programs using a random access memory (RAM) 158 as a work memory. Various types of setting information, control information, and the like necessary for controlling an operation of each components of the apparatus are stored in, e.g., a nonvolatile memory 159.

The digital television set 1 is configured to be able to receive broadcasts of various types, e.g., a terrestrial analog broadcast, a terrestrial digital broadcast, a broadcast satellite (BS) digital broadcast, a communication satellite (CS) digital broadcast, and the like. In addition, the digital television set 1 includes a hard disk drive (HDD) 170 capable of recording received programs and storing received EPG (program guide information).

An antenna 143 for receiving BS/CS digital broadcasts receives satellite digital television broadcast signals. The received digital broadcast signals are supplied via an input terminal 144 to a tuner 145 for satellite digital broadcasts. The tuner 145 performs tuning of the received digital broadcast signals and transmits the tuned digital broadcast signals to a phase shift keying (PSK) demodulator 146. The PSK demodulator 146 performs demodulation of a transport stream (TS) and supplies the demodulated TS to a TS decoder 147a. The TS decoder 147a decodes the TS into digital video signals and audio signals. Then, the TS decoder 147a outputs the digital video signals and the audio signals to the signal processor 100.

An antenna 148 for terrestrial digital broadcasts receives terrestrial digital television broadcast signals. The received digital broadcast signals are supplied via an input terminal 149 to a tuner 150 for terrestrial digital broadcasts. In the present embodiment, the tuner 150 for terrestrial digital broadcasts includes eight tuners (in FIG. 2, the eight tuners are collectively described as a single tuner 150). The tuner 150 performs turning of the received digital broadcast signals and transmits the tuned digital broadcast signals to orthogonal frequency division multiplexing (OFDM) demodulator 151. The OFDM demodulator 151 demodulate TSs and supply the demodulated TSs to TS decoders 147b. The TS decoders 147b decode TSs into digital video signals and audio signals. Then, the TS decoders 147b output the digital video signals and the audio signals to the signal processor 100. The number of the OFDM demodulators 151 is eight and equal to the number of the tuners 150, so that the OFDM demodulators 151 are allocated one-to-one to the tuners 150, respectively. Also, the number of the TS decoders 147b is eight and equal to the number of the tuners 150, so that the TS decoders 147b are allocated one-to-one to the tuners 150, respectively (in Fig. 2, the eight tuners are collectively described as a single block). The eight terrestrial digital television broadcast waves received by the eight tuners 150 are simultaneously demodulated by the plurality of OFDM demodulators 151, and the demodulated waves are simultaneously decoded by the TS decoders 147b into video signals and audio signals. Then, the video signals and the audio signals are output therefrom to the signal processor 100.

The antenna 148 can receive also terrestrial analog broadcast signals. The received terrestrial analog broadcast signals are distributed by a distributor (not shown), and supplied to an analog tuner 168. The analog tuner 168 performs the tuning of the received analog broadcast signals and transmits the tuned analog broadcast signals to an analog demodulator 169. The analog demodulator 169 demodulates analog broadcast signals and outputs the demodulated analog broadcast signals to the signal processor 100. Users can view common antenna television (CATV) programs with the digital television set 1 by connecting a tuner for CATV to, e.g., an input terminal 149 to which the antenna 148 is connected.

The signal processor 100 performs appropriate digital signal processing on digital broadcast signals output from the TS decoders 147a and 147b. The digital broadcast signals are grouped into data signals, video signals, and audio signals. The signals grouped into the video signals are output to a graphic processor 152. The audio signals are output to an audio processor 153. The signal processor 100 converts broadcast signals output from an analog demodulator 169 into video signals and audio signals in predetermined digital formats. The digital video signals obtained by the conversion are output to the graphic processor 152. The digital audio signals obtained by the conversion are output to the audio processor 153. The signal processor 100 performs predetermined digital signal processing on signals input from a line input terminal 137.

An on-screen display (OSD) signal processor 154 generates, under the control of the controller 156, an OSD signal for displaying a user interface (UI) screen and the like. The data signals separated in the signal processor 100 from the other digital broadcast signals are converted by the OSD signal generator 154 into OSD signals of an appropriate format. The OSD signal obtained by the conversion is output by the OSD signal generator 154 to the graphic processor 152. The OSD signal generator 154 receives electronic program table signals which are generated by an electronic program table generator 33 to be described below and which are used for displaying an electronic program table. Then, the OSD signal generator 154 combines the program related information display, the UI screen, and an image representing a currently viewed program with one another and outputs a signal representing a resultant image to the graphic processor 152.

The graphic processor 152 performs decoding processing on the digital video signals output from the signal processor 100 (i.e., receives moving image information). The decoded video signal is also used for generating thumbnail moving images which are reduced-moving-images to be displayed in an electronic program table. The decoded video signal is combined with the OSD signal output from the OSD signal generator 154 by being made to overlap therewith. Then, the combined signals are output to the video processor 155. The graphic processor 152 can selectively output the decoded video signal or the decoded OSD signal to the video processor 155. The graphic processor 152 can receive a video signal (i.e., receive moving image information) representing a program stored in the HDD 170.

The video processor 155 converts signals output from the graphic processor 152 into analog video signals of a format that can be displayed by the display unit 120. The analog video signals obtained by the conversion are output to the display unit 120 and displayed on a display screen 121 thereof. The video processor 155 can output video signals to an external apparatus such as a HDD recorder or the like connected to an external output terminal 135.

The audio processor 153 converts input audio signals into analog audio signals of a format which can be reproduced by the speaker 110. The analog audio signal obtained by the conversion is output to and reproduced by the speaker 110. The audio processor 153 can output audio signals to an external apparatus, such as an amplifier, connected to an external output terminal 136.

A card holder 161 is connected to the controller 156 via a card interface (I/F) 160. A first memory card 119A can be attached to this card I/F 160. The first memory card 119A is a storage medium, e.g., a secure digital (SD) memory card, a multimedia card (MMC), or a compact flash (CF) card. The first memory card 119A attached to the card holder 161, and the controller 156 can transmit information via the card I/F 160. The controller 156 can cause the first memory card 119A to store data such as an image, a piece of music and a broadcast program. The controller 156 can read the data representing the image, the piece of music, the broadcast program, and the like and can cause the display unit 120 to display the read data, and cause the speaker 110 to output audio.

A card holder 163 is connected to the controller 156 via a card I/F 162. A second memory card 119B can be attached to this card I/F 162. The second memory card 119B is a storage medium for storing, e.g., contract information concerning broadcast reception contracts. The second memory card 119B attached to the card holder 163, and the controller 156 can transmit information via the card I/F 160.

A first local area network (LAN) terminal 131 is connected to the controller 156 via a communication I/F 164. The first LAN terminal 131 is used as a port dedicated to a HDD which is compatible with a LAN using an Ethernet (registered trademark). When a LAN-compatible HDD is connected to the first LAN terminal 131 as a network attached storage (NAS), the HDD and the controller 156 can transmit information via the communication I/F 164. In this case, the controller 156 functions as a dynamic host configuration protocol (DHCP) server and controls the LAN-compatible HDD connected to the first LAN terminal 131 by allocating an Internet protocol (IP) address to the LAN-compatible HDD.

The controller 156 can cause the HDD to store data representing images, pieces of music, and broadcast programs. The controller 156 can read the data representing the images, the pieces of music, the broadcast programs, and the like, and cause the display unit 120 to display the data and cause the speaker 110 to output audio. The first LAN terminal 131 serving as the port dedicated to the LAN-compatible HDD is provided. Consequently, information representing a program with high-definition television picture quality can stably be recorded in the HDD without being affected by other factors of network environment and the status of use of a network.

A second LAN terminal 132 is connected to the controller 156 via a communication I/F 165. The second LAN terminal 132 is used as a general port which is compatible with a LAN using an Ethernet (registered trademark). Devices, such as a LAN-compatible HDD, a personal computer (PC), and a digital versatile disk (DVD) recorder incorporating a HDD, are connected to the second LAN terminal 132, for example, using a hub. The devices connected to the second LAN terminal 132, and the controller 156 can transmit information via the communication I/F 165. When a broadband router is connected to the second LAN terminal 132 via the hub, the controller 156 can be connected via the broadband router to a network, e.g., the Internet. A PC and a portable telephone are connected to this network. Thus, information can be transmitted between the controller 156 and the digital television set 1.

Storage media, such as a hard disk and a DVD (optical disk), can be connected to the controller 156 via the communication I/F 165 to the devices, such as the HDD, the PC, and the DVD recorder. The controller 156 can cause the storage media to store data representing images, pieces of music, and broadcast programs via the hub and a device connected to the hub. The controller 156 can read the data, such as the image, the piece of music, and the broadcast program, stored in the storage media, and can cause the display unit 120 to display the read data and cause the speaker 110 to output audio.

A universal serial bus (USB) terminal 133 is connected to the controller 156 via a USB I/F 166. The USB terminal 133 is used as a general USB-compatible port. A portable telephone, a digital camera, a card reader/writer for various types of memory cards, a HDD, a keyboard, and the like are connected to the USB terminal 133 via, e.g., a hub. The controller 156 can transmit information between the controller 156 and each device connected thereto via the USB terminal 133.

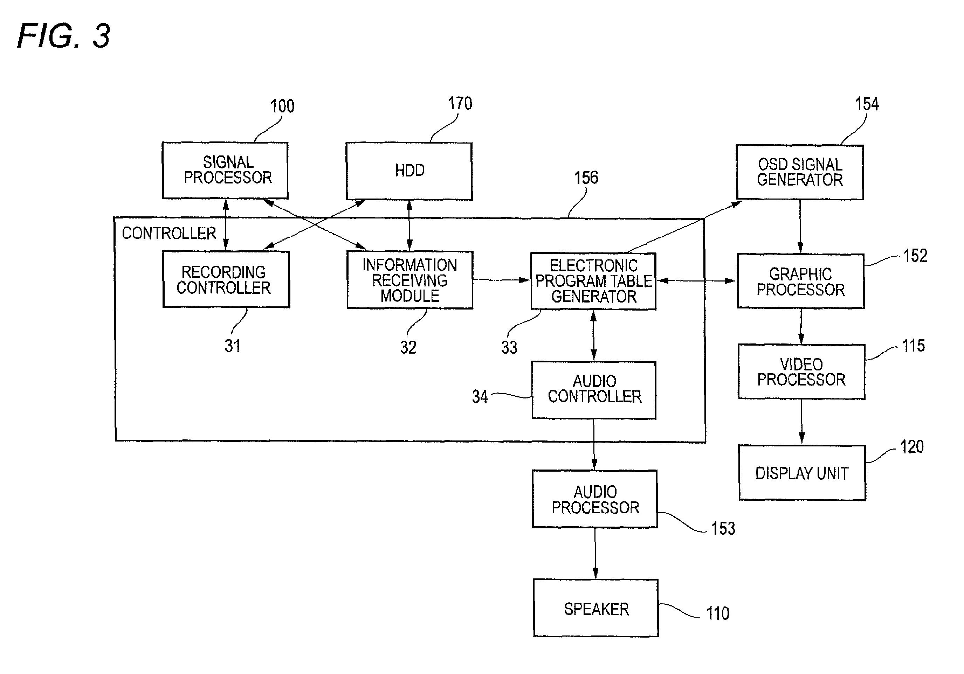

FIG. 3 is a block diagram illustrating an example of the configuration of functional blocks concerning a program related information display of the digital television set 1 according to the present embodiment of the invention. FIG. 3 illustrates the signal processor 100, the HDD 170, the OSD signal generator 154, the graphic processor 152, the video processor 155, the display unit 120, the audio processor 153, the speaker 110, the controller 156, a recording controller 31, an information receiving module 32, an electronic program table generator 33, and an audio controller 34.

The recording controller 31 is a part of the configuration of the controller 156 and controls the broadcast program recording function of the digital television set 1. The recording of a broadcast program is performed, based on a broadcast recording instruction sent from a user's remote controller 117 or the like. When a broadcast program is recorded, the recording controller 31 causes the HDD 170 to store data signals, video signals and audio signals received by the signal processor 100. The digital television set 1 has another function of simultaneously recording a plurality of broadcast waves which can be received from a tuner in a time period in which a user issues an instruction. The digital television set 1 can generate, based on this recording, an electronic program table of recorded programs in the case of recording a plurality of programs in the past. When the programs are recorded, the recording controller 31 receives all of data signals, video signals, and audio signals from the signal processor 100 and causes the HDD 170 to store the received signals. In the present embodiment, a storage destination for storing recorded information is the HDD 170. However, the storage destination therefor according to the invention is not limited thereto. The recorded information can be stored in an external storage medium, such as a DVD and an external HDD, for the digital television set 1 via various interfaces. Alternatively, the recorded information can be stored in another storage medium provided in the digital television set 1.

The information receiving module 32 is one of components included in the controller 156 and has a function of a program information receiving module that receives various types of information to be used by the digital television set 1 when an electronic program table is generated. When an electronic program table indicating a program represented by currently received broadcast waves is generated, the information receiving module 32 receives data signals from the signal processor 100. When an electronic program table concerning broadcast programs that are recorded in the past and that are stored in the HDD 170 is generated, the information receiving module 32 receives data signals (or program information) from the HDD 170. When receiving the data signals, the information receiving module 32 transmits the received data signals to the electronic program table generator 33.

The electronic program table generator 33 has a function of a program table generating module for generating a current electronic program table (including a future electronic program table) or past electronic program table (i.e., an electronic program table signal that is a signal representing an image of an electronic program table), based on data signals received from the information receiving module 32. In the electronic program table, moving images of programs broadcasted by stations are displayed as thumbnail images (small indications) by being associated with the indications of the stations, respectively. When an electronic program table of current programs (or including future programs) is generated, the electronic program table generator 33 instructs the graphic processor 152 to receive video signals representing such programs of stations indicated in the electronic program table. When an electronic program table of past programs is generated, the electronic program table generator 33 instructs the graphic processor 152 to receive video signals representing such programs of stations indicated in the electronic program table. When receiving the instruction, if the acquisition of video signals is possible, the graphic processor 152 receives the video signals. If the acquisition of video signals is unavailable, the graphic processor 152 informs the electronic program table generating unit 33 of this fact. The electronic program table generator 33 receives information representing a current clock-time from a clock (not shown) incorporated into the controller 156, and uses the received information for generating an electronic program table.

When generating an electronic program table, the electronic program table generator 33 transmits the generated electronic program table to the OSD signal generator 154. The OSD signal generator 154 generates OSD signals, based on the received electronic program table signals and outputs the generated OSD signals to the graphic processor 152. When receiving the OSD signals, the graphic processor 152 combines the OSD signal corresponding to the electronic program table with the received video signal representing each thumbnail moving image by superimposing the OSD signal and the received video signal (the moving image is inserted into each predetermined position, at which an associated one of thumbnail images is displayed, in the electronic program table). The graphic processor 152 outputs the combined image signals to the video processor 155. The video processor 155 causes the display unit 120 to display an electronic program table, based on the signal input thereto.

The electronic program table generator 33 generates a selection cursor together with an electronic program table. The digital televisions set 1 displays the electronic program table and the selection cursor. A user operates the selection cursor using, e.g., the remote controller 117. Thus, the user can input information representing various types of operations, such as the selection of a program (content) which the user wishes to view.

When an electronic program table is displayed in the present embodiment, the digital television set 1 can output to the user audio of a thumbnail image of a program broadcasted by a broadcast station corresponding to a position on which the selection cursor is present. When a user selects a broadcast station (or a broadcast program) with the selection cursor, and the user causes the remote controller 117 or the like to instruct the digital television set 1 to output audio of a thumbnail moving image corresponding to the broadcast station selected from the signal processor 100 or the HDD 170, the audio controller 34 of the controller 156 receives audio signals of the thumbnail image (reduced-size moving image) corresponding to the broadcast station selected by the user. The audio controller 34 causes the speaker 110 via the audio processor 153 to output audio. At that time, the audio controller 34 functions as an audio signal output module. The audio controller 34 controls audio output by receiving information that represents a position indicated by the selection cursor on the electronic program table 33.

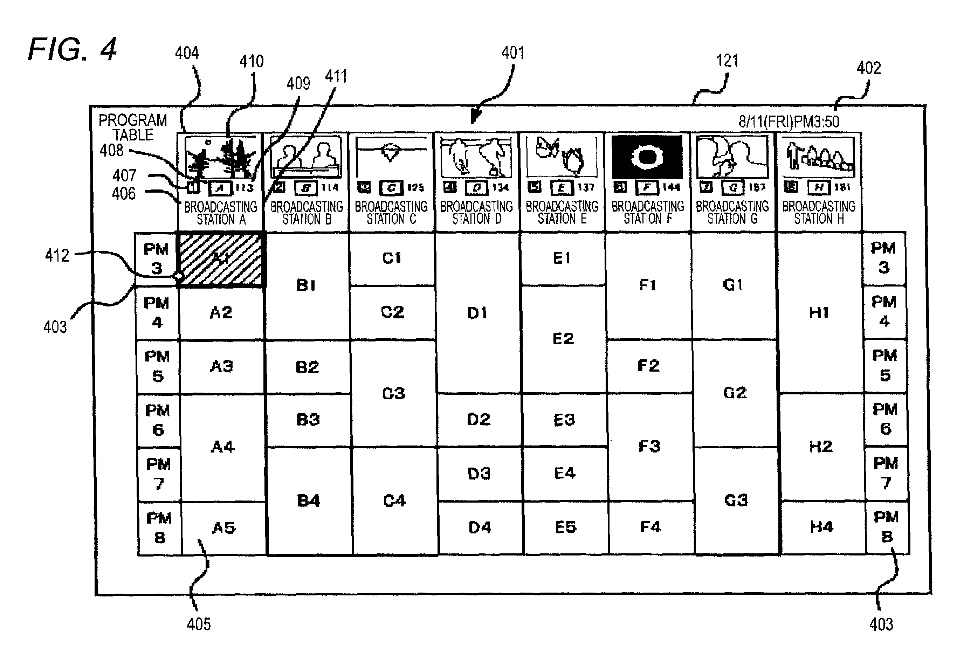

FIG. 4 is a diagram illustrating an example of a display of an electronic program table indicating current and later programs according to the embodiment of the invention. FIG. 4 illustrates a display screen 121, a broadcast program table 401, a current clock-time 402, a broadcasting clock-time display column 403, a station information display column 404, a program column 405, a broadcast station name 406, an allocated channel 407, a station logo 408, a three-digit channel 409, a thumbnail moving image 410, a selection cursor 411, a clock-time pointer 412.

The electronic program table 401 is an electronic program schedule which shows programs broadcasted currently and later. In the electronic program table 401, broadcast stations are displayed by being arranged sideways on the display screen 121. Programs respectively broadcasted in time periods are displayed by being arranged along the lapse of time in the direction along the axis of ordinates from top to bottom. As illustrated in FIG. 4, the electronic program table 401 is illustrated in the entire screen 121. A current clock-time is displayed in the current time 402 which exists at the upper right of the display screen 121 in an upper right part of FIG. 4.

The broadcast clock-time display column 403 indicates broadcasting times of programs broadcasted by being sectioned every hour from top to bottom with lapse of time. However, this broadcast clock-time display column 403 is an exemplification according to the present embodiment. A sectioning time and a direction along which time has elapsed can freely be selected.

Each of the station information display columns 404 is a display column in which information of each broadcast station is represented. In each station information display column 404, a station name 406, an allocated channel 407, a station logo 408, a three-digit channel 409, and a thumbnail moving image 410 are indicated.

Each of the program columns 405 indicates information representing a program broadcasted in a time period indicated in a lateral direction thereof by the station denoted by the associated program information display column 404 provided thereabove. The information indicated in each of the program column 405 is represented by data signals received from broadcast waves. It has been exemplified in the foregoing description of the present embodiment that information concerning a broadcast program, such as information represented by a data signal, is received from a broadcast wave. However, a method of receiving such information is not limited thereto. For example, such information can be received from the Internet via a communication I/F or the like.

The information station name 406 indicates the name of a broadcast station displayed under the program information display column 404. The allocated channel 407 indicates a channel number of a channel that is allocated to a broadcast indicated to the station name 406 and used so that a user simply operates the digital television set 1. The station logo 408 represents a logo mark of the station indicated by the station name 406. The three-digit channel 409 represents a channel number allocated to the three-digit channel

Thumbnail moving images 410 are thumbnail moving images (small indications). A thumbnail image is provided in each of the station information display columns 404. According to the present embodiment, a video currently broadcasted is displayed in the thumbnail moving image 410 as a moving image. Thus, a user can easily grasp the contents of a program currently broadcasted. In addition, the user can easily select a station (program) which the user wishes to view. Even when the contents of a broadcast program are represented by a still image, the still image is only an image at a certain point in time. Thus, it is sometimes difficult for the user to understand what contents of the program are. However, when the programs are represented by the moving images, the user can recognize what the contents of the programs are, similarly to the case of understanding the contents of the program currently broadcasted. Consequently, users can be prevented from misunderstanding the contents of the program when the broadcast station whose program is to be viewed is selected.

When the above thumbnail images 410 are displayed in a frame for showing a program in the program column 405, the following problems may occur. That is, contents of the program to be shown as information in the program column 405 are small. In addition, because videos and character information coexist in a narrow range, the program is difficult to view. According to the present embodiment, the digital television set 1 displays thumbnail images in the station information display column 404, instead of the program column 405, by being associated with each of the broadcast stations. Thus, the above problems can be avoided. Consequently, an electronic program table 401, which is simple and easily understandable, can be provided.

The selection cursor 411 is a cursor for selecting a program, a broadcast station or the like. Users can select a program or the like displayed in the electronic program table 401 by operating the selection cursor 411. In addition, users can input information representing various operations of viewing a selected program or the like, recording the selected program, or outputting audio.

The clock-time pointer 412 is displayed at the right end of the broadcast time display column 403 which is provided at the left side of the display screen 121. As the current time has elapsed, the clock-time pointer 412 is slid downwardly from the surface screen 121. The position of the clock-time pointer 412 corresponds to that of broadcast time display column 403. As illustrated in FIG. 4, the current point in time is 3:50 p.m., so that the clock-time pointer 412 is displayed at a position corresponding to a lower five-sixths (i.e., corresponding to fifty minutes) of the left side of a frame "PM 3", which indicates 3 o'clock in the afternoon on the broadcast time display column 403. Thus, users can grasp a time point, at which a thumbnail moving image is displayed, by displaying the clock-time pointer which is the indication of a temporal position. Alternatively, an indication, such as a time bar, representing a point in time, at which a predetermined time period has elapsed, can additionally be provided.

Users can designate and select the program column 405 by moving the selection cursor 411 which is a selective position indication. In a case where a program indicated by the selected program column 405 is currently broadcasted, when an instruction to view is issued, the digital television set 1 displays the program designated by the program column 405 on the entire screen of the display screen 121. In a case where the program indicated by the selected program column 405 is broadcasted currently or later, when an instruction to record is issued, the digital television set 1 performs recording of the program or reservation of recording of the program. When an instruction to output audio from a thumbnail moving image 410 is issued, the digital television set 1 outputs audio from a program which is being displayed as a thumbnail moving image 410 corresponding to a broadcast station that corresponds to a column on which the selection cursor 411 is displayed. When the digital television set 1 outputs audio from the thumbnail moving image 410, users can intuitively and easily understand contents of the thumbnail moving image 410. In addition, users can easily select a program which the users view. At that time, when the station selected by the selection cursor 411 is moved by maintaining a state in which an instruction to output audio is issued, the digital television set 1 outputs audio from the thumbnail moving image 410 corresponding to the broadcast station selected with the selection cursor 411 in conformity of the movement of the selected station. Users can grasp the currently selected program at a glance.

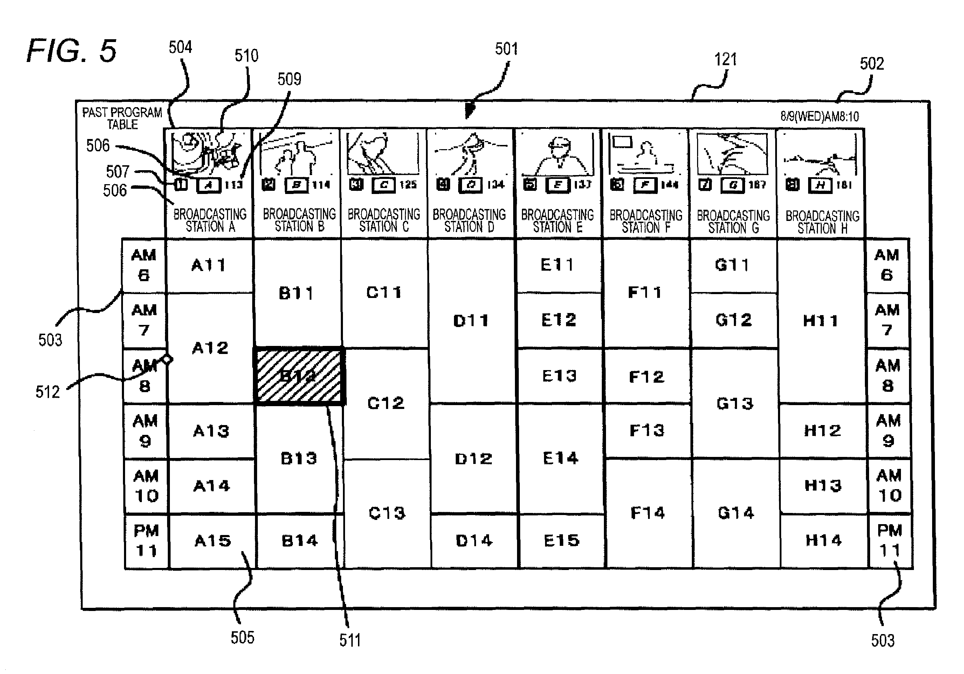

FIG. 5 is a diagram illustrating an example of a display of an electronic program table of programs of a plurality of broadcast stations, which have simultaneously been recorded in the past, according to the present embodiment of the invention. FIG. 5 illustrates a display screen 121, a past electronic program table 501, a recording clock-time 502, a broadcasting clock-time display column 503, a station information display column 504, a program column 505, a broadcast station name 506, an allocated channel 507, a station logo 508, a three-digit channel 509, a thumbnail moving image 510, a selection cursor 511, a clock-time pointer 512. The electronic program table 401 and the past electronic program table 501 are displayed by substantially the same display format.

The electronic program table 401 illustrated in FIG. 4 differs from the past electronic program table 501 illustrated in FIG 5 in that the electronic program table 401 is a program schedule of programs broadcasted currently or later, while the electronic program table 501 is a program schedule of past programs. However, the electronic program table 401 and the past electronic program table 501 are apparently similar to each other. Therefore, description of elements of the past electronic program table 501, which is redundant with the description of the elements of the electronic program table 401, is omitted.

The past electronic program table 501 is an electronic program schedule for displaying information on a plurality of programs recorded in the past and is displayed in a format similar to that of the electronic program table 401. When the electronic program table 401 is generated and displayed, the information receiving module 32, the audio controller 34, the graphic processor 152 receive various information from the signal processor 100. However, when the past electronic program table 501 is generated and displayed, such modules receive (receive) data signals, video signals, and audio signals from the HDD 170.

The recording clock-time 502 indicates a point in time indicated by the clock-time pointer 512 and denotes a clock-time at which a moving image reproduced as the thumbnail moving image 510 is recorded (or an associated program is broadcasted). In the past electronic program table 501, the recording clock-time 502 is displayed at a position corresponding to (or the same position as) the position of the current clock-time 402 displayed in the electronic program table 401. Thus, in the past electronic program table 501, a point in time, at which a moving image is displayed on the thumbnail moving image 510, indicates a time and date, at which the moving image is recorded, instead of the current time 402 in the electronic program table 401. Thus, the electronic program table 401 and the past electronic program table 501 are similar to each other in the display format of time. When using the past electronic program table 501, a user can obtain a feeling similar to that in the case of using the electronic program table 401. Users can use the past electronic program table 501 while the users feel as if the users went back in the past.

The broadcasting clock-time display column 503 indicates a past clock-time based on information received from the HDD 170. According to the present embodiment, a past clock-time is exemplified as the clock-time to be indicated in the broadcast clock-time display column 503. However, the clock-time to be indicated in the broadcast clock-time display column 503 according to the invention is not limited thereto. A present clock-time can be indicated therein.

A moving image representing a broadcast program broadcasted at each clock-time indicated by the recording clock-time 502 by each broadcast station is displayed on the thumbnail moving image 510. The display of a moving image on the thumbnail moving image 510 is performed by causing the graphic processor 152 to receive, via the controller 156, a video signal of a broadcast program represented by broadcast waves at each clock-time indicated by the recording clock-time 502, to then generate a small size indication of a moving image (a thumbnail moving image), and to display the generated moving image as a thumbnail moving image 510.

The selection cursor 511 is used to select a program. The selection cursor 511 is operated by a user. Thus, a user can view a selected program and input information representing an audio output operation and the like.

The clock-time pointer 512 corresponds to the reproduction (current) clock-time 402 and the thumbnail moving image 510. In response to a change in the display position of the clock-time pointer 512, the position of the reproduction clock-time 402 and that of the thumbnail moving image 510 change. In the digital television set 1, it may not be easily recognizable to a user that the thumbnail moving image is displaying a video recorded at which time point when the past electronic program table 501 of the past programs is displayed.
However, in the digital television set 1 according to the present embodiment, by displaying the clock-time pointer 512, users can intuitively recognize the clock-time at which a program's moving image corresponding to a thumbnail image 510 is broadcasted.

Similarly to the case of the electronic program table 401, in response to a user's input of an operation of outputting audio of a program's moving image which corresponds to a thumbnail image 510 displayed on the station information display column 504 corresponding to a broadcast station selected by the selection cursor 511, the past electronic program table 501 outputs audio from the program's moving image.

According to the present embodiment, the display format of the current electronic program table 401 is set to be similar to that of the past electronic program table 501. Thus, users can select and view a broadcast program using the past electronic program table 501 concerning the broadcast programs recorded in the past while feeling as if they went back to the past.

According to the present embodiment, thumbnail moving images are displayed in the region thumbnail moving images 410 of the current electronic program table 401 of current and future programs, and those 510 of the past electronic program table 501 of past programs. Thus, users can check the program recorded in the past and can intuitively select the broadcasted program to check and view the program while feeling as if they went back to the past. Additionally, the possibility of occurrence of users' erroneous selection of the programs can be reduced.

When programs to be recorded are not limited to specific programs or those of a specific broadcast station, and all broadcast programs are recorded at that time, the programs recorded in the past can be reproduced in a manner similar to that in the case of switching among channels whose programs are currently broadcasted.

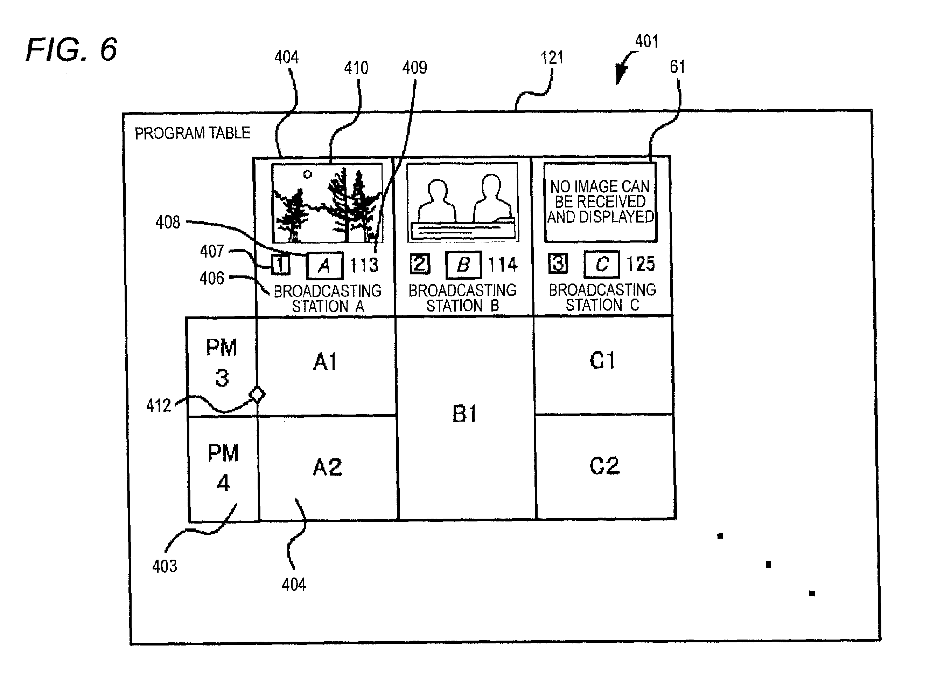

FIG. 6 is a diagram illustrating an example of a display of an electronic program table according to the present embodiment of the invention in a case where a moving image cannot be displayed. FIG. 6 illustrates a part of the electronic program table 401 illustrated in FIG 4, which is an example in a case where a thumbnail image 410 corresponding to a broadcast station C cannot be displayed. FIG. 6 illustrates, by way of example, the electronic program table 401, which is a current electronic program table, for the purpose of illustrating a case where a moving image cannot be displayed. However, this display of a thumbnail image can be applied not only to the electronic program table but to the past electronic program table 501 of past programs similarly.

In a case where the graphic processor 152 cannot receive video signals of a moving image from the signal processor 100 or the HDD 170 when an electronic program table is displayed, the digital television set 1 displays an unavailability indication 61, which indicates that a thumbnail moving image (reduced-size moving image) 410 cannot be displayed, at a position at which the thumbnail moving image 410 should be displayed.

When the graphic processor 152 cannot receive video signals representing a moving image, the graphic processor 152 transmits to the electronic program table generator 33 a notification indicating that the graphic processor 152 cannot receive video signals representing a moving image. When the electronic program table generator 33 receives the notification, the graphic processor 152 for performing graphic processing on the electronic program table generates an electronic program table so that the unavailability indication 61, which indicates that a moving image cannot be displayed, at a position into which a thumbnail moving image 410 is inserted (at which a thumbnail moving image 410 is combined) in the electronic program table. This electronic program table generating module functions also as the unavailability indication generating module. According to the present embodiment, in the unavailability indication 61, a message is displayed, which is the expression "no image is acquirable and thus displayable". However, this message is only an example according to the present embodiment. The message to be displayed therein is not limited thereto. As long as a message means that no (moving) image can be displayed, the message can be displayed on the region unavailability indication 61. The unavailability indication 61 can be expressed by means other than words. For example, the station logo of an associated broadcast station can be used as the unavailability indication 61. Alternatively, no indication can be displayed on the region unavailability indication 61. However, all of such indications are only exemplifications. The indication according to the present embodiment is not limited thereto. As long as an expression can enable a user to recognize that no moving image can be displayed, this expression can be used as the unavailability indication.

Examples of a case where a thumbnail moving image cannot be displayed as described above are that the reception conditions of the digital television set 1 for receiving broadcast waves are bad, that broadcast reception contracts for receiving broadcast waves are not executed, and that a broadcast satellite-conditional access system (B-CAS) card necessary for descrambling broadcast waves is not inserted into a body of the digital television set 1, and the like. Another example of a case where a moving image which ought to be recorded in the HDD 170 in the past cannot be displayed is that data representing a moving image is corrupted.

FIG. 6 illustrates a case where the unavailability indication 61 is displayed on the current or future electronic program table 401 of current or future broadcast programs. However, as described above, the unavailability indication can be displayed in association with programs recorded in the past. Users can view the digital television set 1 while feeling as if they went back to the past, by setting the format of the unavailability indication to be similar to that of the unavailability indication in association with the current or future programs.

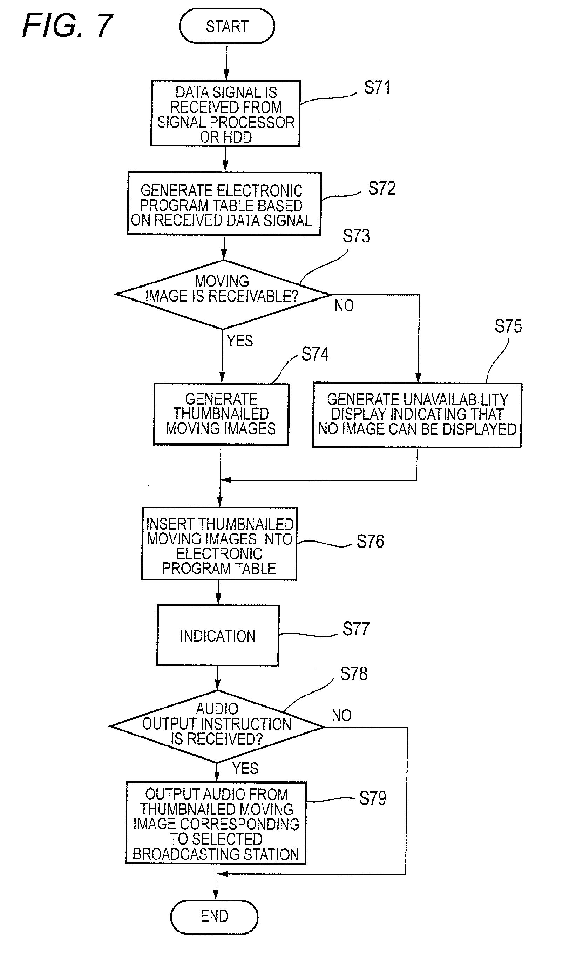

FIG. 7 is a flowchart illustrating an example of a flow of an electronic program table display process to be performed by the digital television set 1 according to the present embodiment.

First, in step S71, when users instructs the digital television set 1 to display an electronic program table, the information receiving module 32 receives from the signal processor 100 or the HDD 170 data signals concerning the electronic program table to be displayed by the instructed digital television set 1.

Next, in step S72, the information receiving module 32 transmits the received data signals to the electronic program table generator 33. Then, the electronic program generator 33 generates an electronic program table (electronic program table signal) based on data signals received from the information receiving module 32.

Next, in step S74, the electronic program generator 33 instructs the graphic processor 152 to receive video data representing moving images broadcasted by the broadcast stations from the signal processor 100 or the HDD 170. If the graphic processor 152 can receive moving image in accordance with the instruction (YES in step S73), in step S74, the graphic processor 152 generates a thumbnail moving image corresponding to an received moving image. On the other hand, if the graphic processor 152 cannot receive a moving image to be broadcasted by a certain broadcast station or by each of all broadcast stations (NO in step S73), in step S75, the graphic processor 152 transmits to the electronic program table generator 33 a notification that a moving image cannot be received, together with information representing the broadcast station that cannot receive a moving image. The electronic program table generator 33 which receives the notification generates, at the position at which a thumbnail moving image corresponding to the broadcast station that cannot receive a moving image would be displayed, the graphic processor 152 for generating an electronic program table generates the unavailability indication 61 indicating that no moving image can be displayed in the thumbnail moving images.

Upon completion of processing in step S74 and/or S75, the electronic program table generator 33 transmits the generated electronic program table signal to the OSD signal generator 154. When the OSD signal generator 154 receives the electronic program table signal, the OSD signal generator 154 generates OSD signal and outputs the generated OSD signal to the graphic processor 152. In step S76, the graphic processor 152 generates a thumbnail moving image and inserts the generated thumbnail moving image into a position at which thumbnail moving images can be displayed in the electronic program table. In step S77, the graphic processor 152 displays the thumbnail moving image on the display unit 120 via the video processor 155.

When an electronic program table is displayed, in step S78, the audio controller 34 determines whether an instruction from a user to output audio is performed. If a user issues an instruction to output audio (Yes in step S78), the audio controller 34 receives audio signals of the thumbnail image broadcasted by the broadcast station corresponding to the position of the selection cursor generated by the electronic program table generator 33 from the signal processor 100 or the HDD 170 and outputs audio. Upon completion of processing in step S79, or if no instruction to output audio is issued (NO in step S78), a sequence of a process flow is finished.

In the digital television set according to the present embodiment, a small size indication of a moving image is provided in the electronic program table. Then, a currently broadcasted program or a recorded program broadcasted in the past, which corresponds to a time and date displayed in the program table, is displayed. Consequently, an electronic program table can be provided, which facilitates the selection of a program that a user wishes to view, regardless of the programs which are being broadcasted or recorded.

Although the embodiment according to the present invention has been described above, the present invention is not limited to the above-mentioned embodiments but can be variously modified. Constituent components disclosed in the aforementioned embodiment may be combined suitably to form various modifications. For example, some of all constituent components disclosed in the embodiment may be removed, replaced, or may be appropriately combined with other components.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An electronic apparatus comprising:
a reproducing module configured to reproduce a content that is previously recorded;
an information receiving module configured to receive electronic program table information including a point in time at which the content is recorded; and
a program table generating module configured to display, when the content is reproduced by the reproducing module, a clock-time at which the content is recorded, and to generate a program table, based on the electronic program table information before or after the clock-time, by partitioning the program table into parts each of which corresponds to an associated one of content providers of the content and includes program information relating to the content.

2. The apparatus of Claim 1 further comprising:
an unavailability indication generating module configured to generate an unavailability indication indicating that reproduction and display of the content are unavailable,
wherein the program display generating module is configured to generate an electronic program table so as to indicate, when reproduction of the content cannot be performed by the reproducing module, the unavailability indication generated by the unavailability indication generating module, which indicates that reproduction and display of the content are unavailable, instead of the content, the reproduction and display of which are unavailable.

3. The electronic apparatus of Claim 1 further comprising:
an audio signal output module configured to receive an audio signal from the content reproduced by the reproducing module and to output the audio signal,
wherein when an instruction to output audio from the content reproduced by the reproducing module is input, the audio signal output module outputs an audio signal from the content.

4. The apparatus of Claim 1,
wherein the program table generating module is configured to generate, at a position corresponding to a time at which the content is recorded in an indication of a time axis of the program table in a display of the program table, a display that sets a point in time, at which the content reproduced by the reproducing module is displayed, to indicate the time at which the content is recorded.

5. The apparatus of Claim 1,
wherein the program table generating module generates a selection position display indicating a display of a location, at which a user can select a program, in the display of the electronic program table.

6. A program table generating method comprising:
reproducing a content that is previously recorded;
receiving electronic program table information including a point in time at which the content is recorded;
displaying, when the content is reproduced, a clock-time at which the content is recorded; and
generating a program table, based on the electronic program table information before or after the clock-time, by partitioning the program table into parts each of which corresponds to an associated one of content providers of the content and includes program information relating to the content.

## Amended claims

### Amended claims in accordance with Rule 137(2) EPC.

**1.** An electronic program table generating apparatus for a television set (1) including a reproducing module configured to reproduce a previously recorded content,
said electronic program table generating apparatus comprises:
an information receiving module (32) configured to receive program table information to be used for generating an electronic program table, including a point in time at which the content is recorded; and
a program table generating module (33) configured to display, when the content is reproduced by the reproducing module (120), a clock-time at which the content is recorded, and to generate the program table, based on the electronic program table information before and/or after the clock-time, by partitioning the program table into parts each of which corresponds to an associated one of content providers of the content and includes program information relating to the content;
**characterized in that**
said program table generating module (33) is configured to generate a clock time pointer (412) to be displayed on the program table;
said electronic program table generating apparatus further comprises means (152) for generating thumbnail moving images of previously recorded content pointed to by the clock time pointer (412); and wherein
said program table generating module (33) is configured to display on the electronic program table the thumbnail moving images of the respective program table parts.

**2.** The apparatus of Claim 1 further comprising:
an unavailability indication generating module (61) configured to generate an unavailability indication indicating that reproduction and display of the content are unavailable,
wherein a program table generating module (33) is configured to generate an electronic program table so as to indicate, when reproduction of the content cannot be performed by the reproducing module, the unavailability indication generated by the unavailability indication generating module (61), which indicates that reproduction and display of the content are unavailable, instead of the content, the reproduction and display of which are unavailable.

**3.** The electronic apparatus of Claim 1 further comprising:
an audio signal output module (153, 110) configured to receive an audio signal from the content reproduced by the reproducing module (1, 156, 34) and to output the audio signal,
wherein when an instruction to output audio from the content reproduced by the reproducing module is input, the audio signal output module outputs an audio signal from the content.

**4.** The apparatus of Claim 1,
wherein the program table generating module (33) is configured to generate a selection position display (411) indicating a display of a location, at which a user can select a program, in the display of the electronic program table.

**5.** A program table generating method comprising:
reproducing a previously recorded content;
receiving electronic program table information including a point in time at which the content is recorded;
displaying, when the content is reproduced, a clock-time at which the content is recorded; and
generating a program table, based on the electronic program table information before and/or after the clock-time, by partitioning the program table into parts each of which corresponds to an associated one of content providers of the content and includes program information relating to the content;
generating a clock time pointer (412) to be displayed on the program table;
generating thumbnail moving images of previously recorded content pointed to by the clock time pointer (412); and
displaying on the electronic program table the thumbnail moving images of the respective program table parts.
